# FASCICULE DE BREVET EUROPEEN

(11) **EP 3 007 979 B1**
(45) Date de publication et mention de la délivrance du brevet: **31.01.2018**
(21) Numéro de dépôt: 14733559.0
(22) Date de dépôt: 11.06.2014
(51) Int. Cl.: B64F 1/04, B64C 25/32

(54) **DISPOSITIF POUR LE DEPLACEMENT AU SOL DES AERONEFS**
VORRICHTUNG ZUR BEWEGUNG VON FLUGZEUGEN AM BODEN
DEVICE FOR MOVING AIRCRAFT ON THE GROUND

(30) Priorité: 14.06.2013 FR 1355597
(43) Date de publication de la demande: 20.04.2016
(73) Titulaire: Airbus Group SAS, 31700 Blagnac (FR)
(72) Inventeur: JOUBERT, Emmanuel, F-92130 Issy les Moulineaux (FR); NESPOULOUS, Charles, F-92210 Saint-Cloud (FR); RECHAIN, Bruno, 92270 Bois-Colombes (FR); SMAOUI, Hichem, F-75014 Paris (FR)
(74) Mandataire: Maupilier, Didier
(86) Numéro de dépôt international: PCT/EP2014/062072
(87) Numéro de publication internationale: WO 2014/198746

(56) Documents cités:
- DE-A1- 4 102 271
- FR-A1- 2 479 138
- US-A- 3 589 300
- US-A- 4 709 883
- US-A- 4 797 386
- US-A1- 2005 082 424

## Description

La présente invention appartient au domaine de la propulsion des aéronefs.

Plus particulièrement l'invention concerne un dispositif assurant la propulsion d'un avion lors de son déplacement au sol pendant les phases de basses vitesses sur les taxiways, c'est à dire les voies de circulation utilisées par les aéronefs lors de leurs déplacements au sol, ou pendant les phases à grandes vitesses lors des accélérations/décélérations sur une piste lors de décollages ou d'atterrissages.

Dans le domaine des aéronefs et en particulier des avions, le déplacement au sol est très généralement réalisé par roulement sur un train d'atterrissage comportant des roues sous l'action des moteurs de l'aéronef ou d'un véhicule tracteur.

On distingue le plus souvent le tractage qui est mis en oeuvre pour quitter un point de stationnement lorsque l'avion doit reculer ou être déplacé sans utiliser ses moteurs, le roulage sur les taxiways qui est réalisé à faible vitesse mais avec la force propulsive des moteurs de l'aéronef soit pour se rendre au début de la piste de décollage avant un décollage soit pour se rendre au parking après un atterrissage, le décollage qui est un roulage à grande vitesse au cours duquel l'avion propulsé par ses moteurs accélère depuis la vitesse nulle jusqu'à la vitesse ou les roues quittent le sol, et enfin l'atterrissage lorsque l'avion reprend contact avec le sol à une vitesse compatible avec sa sustentation et décélère sur la piste jusqu'à une vitesse suffisamment faible pour prendre un taxiway.

Cette solution d'un train d'atterrissage à roue s'avère pénalisante par la nécessité de disposer sur l'avion d'un train d'atterrissage lourd et complexe, rentrant lorsque l'avion vol en croisière à une vitesse supérieure à quelques centaines de km/h, qui n'est utile que pendant une période très courte de la mission et par l'utilisation des moteurs de propulsion pour le roulage à des vitesses faibles pour lesquels ces moteurs, par exemple des réacteurs, sont totalement désoptimisés. Cependant, en absence de solutions plus satisfaisantes, la quasi totalité des avions est aujourd'hui conçue suivant cette architecture.

Pour améliorer les performances, il a été imaginé l'utilisation de dispositifs annexes.

Ainsi, il a été envisagé de munir certaines roues du train d'atterrissage de moteurs qui en permettant le roulage à basse vitesse évite d'utiliser les moteurs de propulsion dans les déplacements sur les taxiways. Cette solution présente cependant le défaut de rendre le train d'atterrissage encore plus complexe et lourd qu'un train d'atterrissage conventionnel et n'a pas encore reçu d'application concrète en exploitation des aéronefs.

Il a également été développé pour assister les avions au décollage des systèmes de catapultes. La catapulte apporte un supplément d'énergie à l'avion pendant l'accélération au décollage en tractant l'avion avec une force adaptée.

Un tel système qui est intégré dans la piste de décollage permet de réduire la longueur de roulage lors du décollage ce qui a justifié sa généralisation sur les portes avions. Cependant une catapulte est un dispositif qui s'avère contraignant sur le plan opérationnel et exige des puissances importantes pour développer l'énergie voulue sur un temps très court. Une catapulte ne dispose que d'une seule direction fonctionnelle, ce qui ne gène pas son fonctionnement sur un porte avions qui se place toujours face au vent lors des décollages d'avions, mais imposerait en pratique une catapulte dans chaque sens de la piste pour une piste « fixe ». Compte tenu des diverses contraintes d'un tel système les avions bénéficiant d'une aide au décollage par catapulte sont actuellement limités à quelques dizaines de tonnes au maximum.

Il est connu de mettre en oeuvre des moyens de lévitation et d'accélération d'un aéronef sur une piste par des moyens magnétiques. Par exemple le brevet US 4709883 propose d'accélérer un avion porteur d'un véhicule spatial au moyen d'un chariot en sustentation magnétique circulant sur une piste mettant en oeuvre des électro-aimants à supraconducteurs.

Cette solution pose des problèmes de mise en oeuvre en raison de la technologie des électro-aimants supraconducteurs et de la mise en oeuvre d'un chariot porteur qui s'avère difficilement applicable pour les applications aux avions civils dans le contexte d'un aéroport.

La présente invention concerne un dispositif pour réaliser le roulage et ou le décollage/atterrissage des aéronefs sur une plateforme aéroportuaire qui permet de s'affranchir des contraintes des systèmes actuels.

Dans le cas de l'invention il est fait appel à des propriétés magnétiques des matériaux supraconducteur dit de type II pour produire les forces de traction nécessaires aux mouvements au sol de l'aéronef et en assurer le guidage le long des axes de déplacement et, dans certaines modes de réalisation, assurer une lévitation de l'avion au dessus de la piste lors de ses mouvements au sol au cours des phases de roulage sur les taxiways, lors des décollages et des atterrissages.

Pour cela,, un dispositif comporte au moins une piste, par exemple une piste de décollage ou d'atterrissage, un taxiway ou une aire de parking, et au moins un aéronef, par exemple un avion, un hélicoptère ou un drone, apte à se déplacer sur la piste.

L'aéronef est solidaire d'un élément tracteur qui comporte une masse magnétique formée principalement avec un matériau supraconducteur de type II qui présente la particularité de conserver une mémoire magnétique de l'environnement magnétique où il est plongé lorsque sa température est descendue en dessous de sa température critique de supraconductivité dans des conditions de champ magnétique qui place le matériau dans un état de phase 2.

La piste comporte des bobines de stator intégrées dans la piste, agencées suivant au moins une ligne de bobines parallèle à un axe de la piste.

Le dispositif comporte un système de contrôle/commande qui alimente les bobines de stator de manière à un créer champ magnétique assurant une lévitation de l'au moins un élément tracteur, préalablement magnétisé dans un état de supraconduction en phase 2, au dessus de la piste.

Il est ainsi obtenu un dispositif qui permet de réaliser des déplacements au sol des aéronefs sans qu'il soit nécessaire de mettre en oeuvre les moteurs des aéronefs ce qui à pour conséquence de réduire la pollution et le bruit dans la zone de la piste et de réduire la consommation de carburant des aéronefs.

Le système de contrôle/commande des bobines de stator comporte au moins un mode d'alimentation des bobines de stator pour créer un champ magnétique variable pour produire une force de déplacement de l'élément tracteur suivant la ligne de bobines de sorte que l'aéronef est lui même soumis à la force contrôlée qui s'applique à l'élément tracteur duquel il est solidaire.

L'élément tracteur comporte un système de maintien de la masse magnétique à une température comprise entre une température inférieure à une température critique Tc2 de transition de phase 2 du matériau supraconducteur de type II et supérieure à une température critique Tc1 de transition de phase 1 du matériau supraconducteur de type II. Il est ainsi possible de maintenir indéfiniment l'état magnétique du matériau superconducteur sans apport d'énergie autre que celui nécessaire au maintien de sa température.

Pour initialiser l'élément tracteur celui-ci comporte au moins une bobine d'initiation agencée pour produire un champ de magnétisation initial dans la masse magnétique. Dans cette agencement, il est possible de d'initialiser l'état magnétique de la masse magnétique sans qu'il soit nécessaire de faire appel à des moyens extérieurs de création du champ de magnétisation ce qui confère une autonomie à l'élément tracteur et à l'avion dont il est solidaire.

Dans une forme de réalisation, le matériau supraconducteur de type II de l'élément tracteur est un alliage YBaCuO comportant de l'Yttrium, du Baryum, du Cuivre et de l'Oxygène.

Il est ainsi obtenu une masse dont les propriétés électriques et magnétiques dans la phase 2 du matériau sont obtenues pour des températures cryogéniques relativement élevées correspondant à la température de l'azote liquide. L'azote liquide peut être facilement stockée sur de relativement longues périodes à l'échelle de la mission d'un aéronef, voire être produite localement par un cryogénérateur associé à l'élément tracteur.

Dans un mode de réalisation, l'élément tracteur est solidaire de l'aéronef pour tracter l'aéronef roulant sur des roues d'un train d'atterrissage de l'aéronef. Dans ce mode l'élément tracteur est limité à des fonctions d'entraînement en translation au sol de l'avion et ce mode est aisément adaptable à des avions existants.

Dans un autre mode de réalisation, au moins un atterrisseur de l'aéronef, avantageusement plusieurs atterrisseurs, comporte au moins un élément tracteur fixé audit au moins un atterrisseur pour assurer une lévitation de l'aéronef et une traction de l'aéronef. Dans ce mode de réalisation, l'élément tracteur permet de ne plus disposer de roues, pour le moins d'en diminuer le nombre, sur les atterrisseurs, et l'avion n'a plus lors de ses déplacement au sol de contacts avec la piste source de frottement et de contraintes liées au roulement et au freinage.

Dans une forme de réalisation, particulièrement adaptée lorsque des avions comportant des éléments tracteurs agencés sur l'avion séparés en distance latéralement, la piste comporte une pluralité de lignes de bobines sensiblement parallèles à l'axe de la piste.

Dans une forme de réalisation, le dispositif comporte une pluralités de pistes comportant chacune au moins une ligne de bobines sensiblement parallèle à un axe de chacune des dites pistes de sorte que les lignes de bobines forme un réseau continu d'une plateforme aéroportuaire. Il est ainsi possible de déplacer un aéronef par le moyen des bobines de stator sur toutes les zones de circulation au sol d'un aéronef.

Dans une forme de réalisation, le dispositif comporte au moins un atelier de magnétisation d'éléments tracteurs qui est relié à la ligne de bobines de la piste par une ligne de bobines.

L'invention concerne également un p de déplacement d'un aéronef, solidaire d'un élément tracteur comportant une masse magnétique formée principalement avec un matériau supraconducteur de type II, sur une piste, comportant des bobines de stator intégrées dans ladite piste, les dites bobines étant agencées suivant au moins une ligne de bobines parallèle à un axe de ladite une piste, comportant :
- une étape préalable de magnétisation de la masse magnétique par application d'un champ magnétique initial à ladite masse magnétique lorsque ladite masse magnétique est à une température supérieure à une température critique Tc ,puis par un abaissement de la température de ladite masse magnétique à une température inférieure à la température critique Tc en maintenant le champ magnétique initial, puis par une annulation du champ magnétique initial en maintenant la température de la masse magnétique en dessous de la température critique Tc ;
- une étape de création d'un champ magnétique par les bobines de stator pour induire sur l'élément tracteur une force de lévitation de l'élément de traction .
- une étape de modification du champ magnétique créé par les bobines de stator pour induire sur l'élément tracteur une force de traction dans un plan sensiblement horizontal et orientée suivant l'au moins une ligne de bobines.

Le procédé est particulièrement adapté à la mise en oeuvre du dispositif de l'invention.

Dans une méthode de mise en oeuvre, le champ magnétique créé par les bobines de stator pour induire une force de traction est modifié par un système de contrôle/commande d'alimentation des bobines de stator en fonction d'ordres transmis audit système de contrôle/commande, les ordres étant porteur d'une consigne de vitesse et ou d'accélération de l'aéronef.

Dans une méthode de mise en oeuvre du procédé, des moteurs de propulsion de l'aéronef sont utilisés pour produire une poussée sur ledit aéronef lors de ses déplacements.

Les forces de traction apportées par l'élément tracteur sont alors apportées en complément et ou en remplacement partiel de la poussée des moteurs de propulsion ce qui s'avère particulièrement bénéfique pour les décollages.

Suivant le besoin, la force de traction induite sur l'élément tracteur orientée suivant l'au moins une ligne de bobines peut être orientée soit vers une direction avant de l'aéronef, soit vers une direction arrière de l'aéronef. Il est ainsi possible non seulement de réaliser des déplacements en marche avant ou en marche arrière de l'aéronef mais également de réaliser un freinage pour ralentir l'aéronef en déplacement ou pour immobiliser l'aéronef en un emplacement donné lorsque celui-ci est soumis à d'autres forces telles que le vent ou la poussée des moteur dans le cas d'un point fixe avec les moteurs de propulsion en fonctionnement.

L'invention concerne également un élément tracteur comportant une masse magnétique formée principalement avec un matériau supraconducteur de type II, comportant des moyens de maintien de la masse magnétique à une température cryogénique inférieure à une température critique Tc de superconduction électrique et comportant au moins un crochet pour solidariser ledit élément tracteur à un aéronef.

Les moyens de maintien en température comporte par exemple une enceinte isolée d'un cryostat déterminant un volume contenant un liquide à une température inférieure à la température critique Tc et qui permet de maintenir la température souhaitée sans apport d'énergie pendant un temps déterminé par les seules pertes thermiques et la quantité de liquide contenue dans l'enceinte et dans un éventuel système de remplissage en liquide.

Le matériau supraconducteur de type II est un alliage YBaCuO comportant de l'Yttrium, du Baryum, du Cuivre et de l'Oxygène, supraconducteur en phase 2 à la température de l'azote liquide.

Dans une forme de réalisation, l'élément tracteur comporte au moins une bobine d'initiation agencée pour produire un champ de magnétisation initial dans la masse magnétique.

L'invention concerne également un avion comportant au moins un élément tracteur de l'invention fixé à l'avion de sorte que l'élément tracteur se trouve à proximité du sol lorsque l'avion est au sol et qui permet à l'avion de profiter des bénéfices du dispositif de l'invention.

La description d'un mode de réalisation non limitatif de l'invention est faite en référence aux figures qui représentent :
- Figure 1 :: une vue synoptique globale du dispositif et de ses principaux sous-ensembles ;
- Figures 2a, 2b et 2c :: des vues respectivement de dessus, de profil et de face d'un avion avec un train d'atterrissage à roues et solidaire d'un élément tracteur, sur une piste de décollage/atterrissage incorporant des bobines de stator visibles par effet de transparence de la piste ;
- figure 3 :: une vue très schématique en coupe d'un élément tracteur ;
- figure 4 :: un schéma de présentation d'un élément en matériau supraconducteur de type I dans un champ magnétique, à une température supérieure à la température critique de supraconduction, détail (a), et à la température inférieure à la température critique de supraconduction, détail (b) ;
- figure 5 :: les diagrammes de phase de supraconduction comparés d'un supraconducteur de type I, détail (a), et d'un supraconducteur de type II, détail (b) ;
- figure 6 :: une illustration du phénomène de vortex et de piégeage des lignes de champ magnétique dans un matériau supraconducteur de type II en état de supraconduction de type II ;
- figure 7 :: un plan, à titre d'exemple, des pistes d'une plateforme aéroportuaire comportant une pluralité de pistes de décollage/ atterrissage, de taxiways, de bretelles et d'aires de parking ;
- figure 8 :: une vue de principe d'un avion dont une lévitation est assurée au dessus d'une piste par une pluralité d'éléments tracteur en vue de profil détail (a), et en vue de face, détail (b).

Sur les différentes figures représentant des modes différents de réalisation de l'invention des éléments équivalents portent le même repère.

Pour des raisons d'illustration, les différents éléments d'un même dessin ou sur les différents dessins ne sont pas nécessairement représentés à la même échelle.

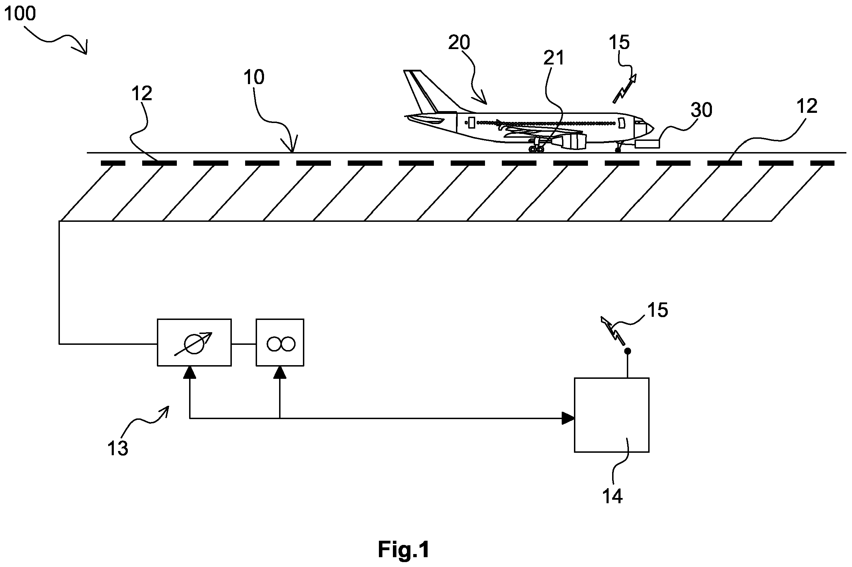

La figure 1 représente une vue schématique partielle d'un exemple suivant l'invention d'un dispositif d'ensemble pour l'assistance au roulage et/ou au décollage et/ou atterrissage qui comporte une piste 10 de décollage/atterrissage et un avion 20, par exemple un avion en phase de décollage sur ladite piste.

La phase de décollage d'un avion est celle au cours de laquelle l'avion accélère, depuis une vitesse nulle, ou faible (quelques m/s) par rapport à une vitesse de décollage, jusqu'à une vitesse Vlo lui permettant de quitter le sol.

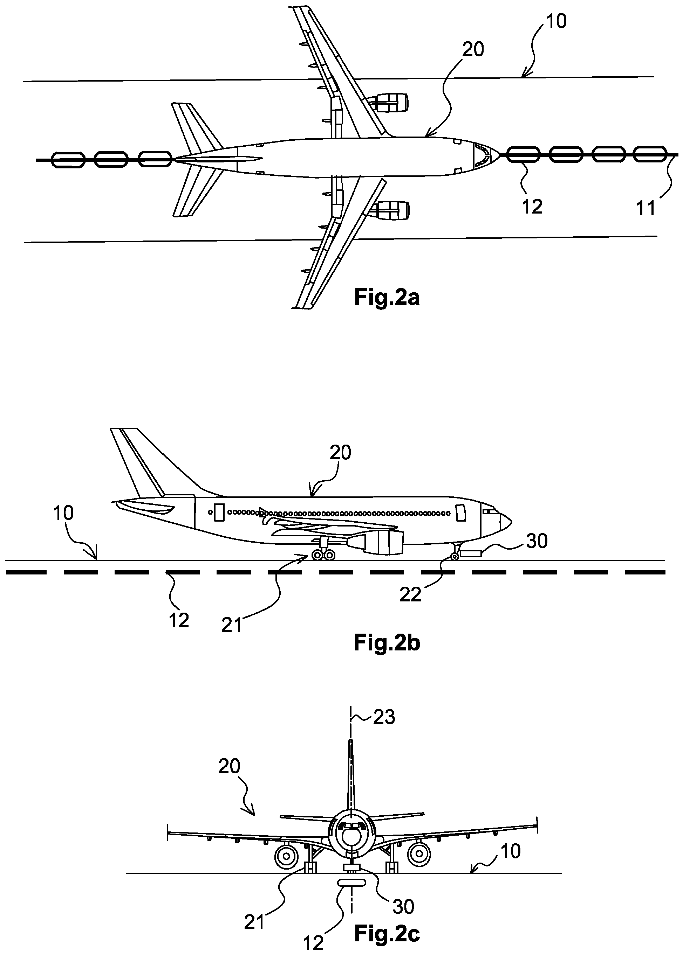

Dans le mode de réalisation de l'exemple de dispositif illustré sur les figures 2a, 2b et 2c, l'avion 20 comporte un train d'atterrissage 21 équipé de roues dont les dimensions et les résistances leurs permettent de supporter le poids de l'avion au sol et son déplacement par roulage sur les dites roues.

De manière connue, la piste 10 est définie principalement par ses dimensions, longueur et largeur, supposées adaptées aux besoins de l'avion, ainsi que les diverses caractéristiques de résistance de son revêtement, et également par un axe 11 qui détermine l'orientation de la piste et qui correspond à la trajectoire suivie au sol par un avion lors des phases de décollage et d'atterrissage sur ladite piste.

En outre dans l'invention, l'avion 10 est solidaire d'un élément tracteur 30 comportant une masse magnétique, ici solidaire du train d'atterrissage 21 au niveau d'un atterrisseur avant 22, situé dans plan axial vertical 23 de l'avion. L'élément tracteur 30 est en outre au dessus du sol et proche du sol, quelques centimètres ou dizaines de centimètres, lorsque l'avion est au sol.

Comme il sera détaillé ultérieurement, la masse magnétique est formée principalement avec un matériau supraconducteur de type II, par exemple un alliage YBaCuO qui devient supraconducteur à des température inférieures à 70K, c'est-à-dire que ce matériau, qui appartient à la famille des supraconducteurs à hautes températures, est supraconducteur à la température de l'azote liquide à la pression atmosphérique ordinaire au niveau de la mer.

En outre dans l'invention, la piste 10 comporte suivant son axe 11 une succession de bobines de stator 12 aptes chacune à former un champ magnétique lorsqu'elles sont alimentées par un courant électrique, et agencée pour produire un champ magnétique dont les lignes de champ sont orientées sensiblement verticales dans un repère terrestre local au niveau de chaque bobine de stator, par exemple les lignes du champ produit par une bobine plate dont le plan est sensiblement parallèle à la surface du sol.

Les bobines de stator 12 sont agencées suivant l'axe 11 de la piste de sorte qu'un champ magnétique puisse être créé en tout lieu sur toute la longueur de la piste où l'avion, plus particulièrement où l'élément tracteur 30, est susceptible de se trouver au sol lors d'un décollage ou d'un atterrissage.

Les bobines de stator 12 sont par exemple des bobines supraconductrices mais non nécessairement.

Dans une forme de réalisation les bobines de stator 12 sont intégrées dans une épaisseur de la piste 10, le matériau de revêtement de la piste étant choisi pour le pas perturber significativement les lignes de champs magnétiques, un béton ou un enrobé conventionnel connu pour le revêtement des pistes répondant à cette exigence.

Dans tous les modes d'installation possibles des bobines de stator 12, chacune des dites bobines de stator est fixée solidement au sol de sorte d'une part que ladite bobine soit immobilisée lorsqu'elle est soumise aux forces générées lors du fonctionnement du dispositif et que d'autre part l'intégrité des enroulements de la bobine soit également assuré.

Les bobines de stator 12 sont en outre raccordées électriquement à un système d'alimentation 13 des bobines qui assure le transport d'énergie électrique vers lesdites bobines et réalise les commutations nécessaires pour alimenter chaque bobine avec une polarité souhaitée lorsqu'une bobine doit être active et pour couper son alimentation lorsqu'une bobine doit être passive.

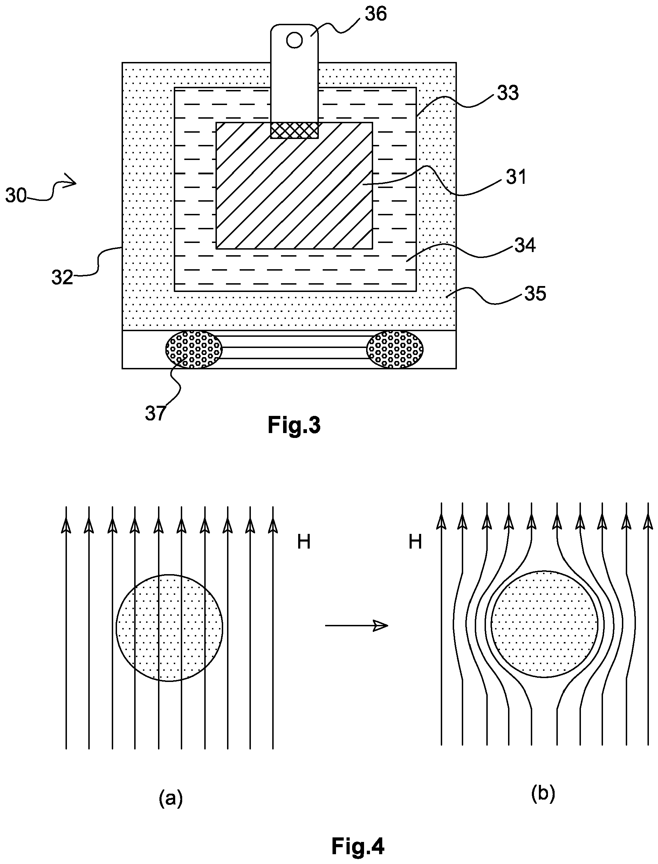

En référence à la figure 3, la masse magnétique 31 est, comme déjà signalé, formée principalement au moyen d'un matériau supraconducteur de type II.

Les propriétés magnétiques des supraconducteurs sont connues en ce que, dans l'état supraconducteur où la résistance électrique est nulle, un corps réalisé dans un de ces matériaux et en état de supraconductivité lorsqu'il est plongé dans un champ magnétique est contourné par les lignes de champ, alors que ces mêmes lignes de champ le traverse lorsqu'il n'est pas dans l'état supraconducteur comme l'illustre symboliquement la figure 4.

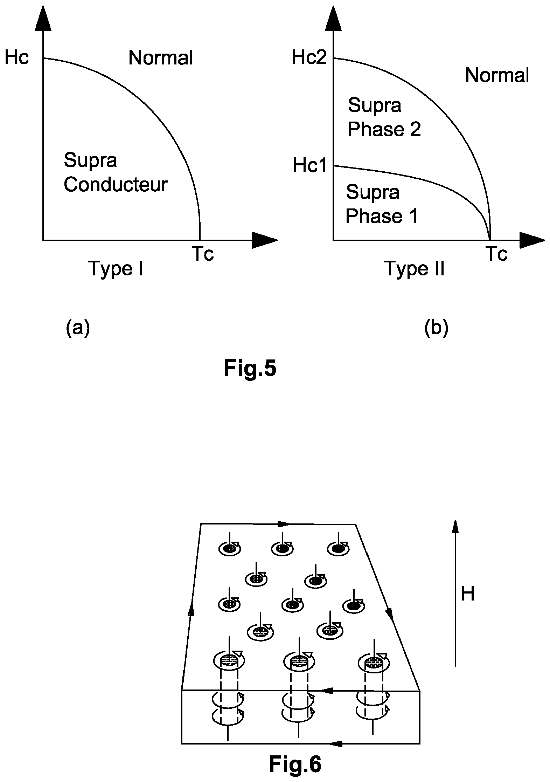

Cette propriété, connue sous le nom d'effet Meissner, est constatée dans le cas des supraconducteurs de type I pour autant que le supraconducteur soit placé à une température inférieure à la température critique Tc du matériau et que l'intensité du champ magnétique externe soit inférieur à une intensité critique au delà de laquelle le matériau perd ses caractéristiques de supraconduction, figure 5 (a).

Dans le cas des supraconducteurs de type II, il est connu un état du matériau dans lequel les lignes de champ magnétique auquel est soumis le corps réalisé en matériau supraconducteur traversent ce dernier sans qu'il ait perdu ses caractéristique de supraconduction.

Avec ce type de matériau, lorsqu'un corps dont il est constitué est placé dans un champ magnétique initial d'une intensité supérieure à un champ critique Hc1 de phase 1, et inférieur à un champ critique Hc2 de phase II, conformément au diagramme de phase illustré sur la figure 5 (b), puis est refroidi en dessous d'une température critique Tc de supraconductivité, il se forme dans le matériau des structures stables généralement désignées vortex, comme schématisées sur la figure 6, qui forment une mémoire des lignes de champ magnétique et qui persistent, lorsque le champ magnétique extérieur est supprimé, aussi longtemps que la température du matériau est maintenue en dessous de la température critique Tc de supraconductivité.

Dans cet état de la matière, le corps soumis à un champ magnétique se maintient dans l'espace de sorte que les lignes de champ magnétique coïncident avec celles existants lors de son refroidissement en dessous de la température critique Tc.

Ce maintien dans l'espace concerne non seulement les directions orthogonales aux lignes de champ magnétique mais également celle suivant la direction du champ magnétique. Le corps est alors en lévitation sans contact direct avec un support, ou suspendu suivant les conditions initiales.

Dans l'invention, la masse magnétique 31 de l'élément tracteur 30, préalablement magnétisée, c'est-à-dire amenée en dessous de sa température critique Tc en présence d'un champ magnétique initial dont les lignes de champ sont orientées verticalement et dont l'intensité est inférieure au champ critique Hc2 et supérieur au champ critique Hc1, est placée dans le champ magnétique créé par les bobines de stator 12 de la piste 10.

La commutation des bobines réalisée pour déplacer le champ magnétique en résultant le long d'une trajectoire correspondant à l'alignement des bobines, de manière similaire au fonctionnement d'un moteur linéaire électrique conventionnel dont les bobines constituent un stator, entraîne le déplacement contrôlé de la masse magnétique 31 de l'élément tracteur, donc de l'élément tracteur 30 équivalent à un rotor du moteur linéaire, et donc de l'avion 20 auquel est solidarisé l'élément tracteur.

Du fait des propriétés des matériaux supraconducteurs de type II de la masse magnétique 31 de l'élément tracteur, ledit élément tracteur se trouve en lévitation au dessus de la piste 10, ne créant aucun frottement mécanique avec la piste. Il est également déplacé par le champ magnétique des bobines de stator suivant le sens de déplacement imposé par le déplacement du champ magnétique créé, et est maintenu latéralement du fait que la masse magnétique 31 se positionne pour être traversée par les lignes de champs magnétique et de l'absence de champ magnétique en dehors de l'axe défini par les bobines de stator 12.

L'élément tracteur 30 comporte également des moyens de refroidissement et de maintien à la température cryogénique souhaitée de la masse magnétique.

Avantageusement la masse magnétique 30 est placée dans une enceinte 32 limitant les échanges thermiques avec l'extérieur.

De manière connue une telle enceinte est par exemple formée par une enceinte intérieure d'un cryostat 33 déterminant un volume 34 contenant la masse magnétique 31, ladite enceinte étant elle-même placée dans une enveloppe 35 isolante sur le plan thermique.

L'enceinte intérieure 33 est avantageusement remplie d'un liquide froid, par exemple de l'azote liquide à la température souhaitée inférieure à Tc, par exemple par l'intermédiaire d'un circuit de remplissage non représenté.

Dans un exemple de réalisation, la quantité de liquide froid dans le cryostat est définie pour assurer le maintien à la température inférieure à Tc voulue de la masse magnétique 31 pendant une durée d'utilisation souhaitée avant un nouveau remplissage du cryostat. Dans ce cas la quantité de liquide froid est alors déterminée en fonction des fuites thermiques liées aux imperfections de l'isolation du cryostat et de la durée pendant laquelle la température de la masse magnétique doit être maintenue en dessous de la température critique Tc.

Dans un autre exemple de réalisation non illustré, l'élément tracteur 30 comporte une réserve de liquide froid reliée au cryostat de sorte à introduire et ou maintenir un niveau souhaité de liquide froid dans le cryostat lors du fonctionnement de l'élément tracteur.

Dans un autre exemple de réalisation non représenté, le liquide froid est produit au niveau de l'élément tracteur par un refroidisseur cryogénique (cryocooler), par exemple une machine à cycle Stirling ou à effet Peltier.

Afin de transmettre les efforts générés par les champs magnétiques sur l'élément tracteur 30 à l'avion 20, des moyens de liaison mécanique de résistance adaptée sont agencés entre la masse magnétique 31, ou une des enceintes le contenant, et des moyens d'accrochage à l'avion.

Ces moyens de liaison mécanique, qui doivent assurer la transmission des efforts lors du déplacement de l'avion, et dans certains modes de son accélération jusqu'à des vitesses proches de la vitesse de décollage Vlo, comporte par exemple un ou des crochets 36, illustré de manière schématique sur la figure 3, qui sont autant que possible réalisés dans un matériau mauvais conducteur de la chaleur pour limiter les pertes thermiques entre l'intérieur du cryostat et l'extérieur. Un matériau tel qu'un Invar ®, alliage à forte teneur en nickel, est une possibilité pour réaliser des crochets ou des bielles aptes à transmettre des efforts significatifs avec une conduction thermique modérée apportée par les caractéristiques du matériau.

Dans un exemple de réalisation, l'élément tracteur comporte une ou plusieurs bobines d'initiation 37 agencées pour créer le champ magnétique initial, ces bobines d'initiation étant alimentées temporairement de sorte à créer le champ magnétique initial voulu, maintenu dans une étape pendant laquelle la température de la masse magnétique 31 est abaissée en dessous de la température critique Tc.

Dans un autre exemple de réalisation, une ou plusieurs bobines d'initiation sont intégrées dans la piste de sorte à créer le champ magnétique initial. La ou les bobines d'initiation sont par exemple des bobines dédiées localisées en des emplacements choisis sur la piste ou bien sont des bobines de stator de la piste dont l'alimentation est réalisée afin de créer le champ magnétique initial. Dans ces cas il est nécessaire que l'élément tracteur soit localisé à l'emplacement d'une bobine d'initiation ou d'une des bobines de stator prévue pour pouvoir être alimentée comme une bobine d'initiation.

Dans l'exemple illustré sur les figures 1, 2a, 2b et 2c, seule une piste de décollage/atterrissage est représentée et dans ce cas avec des bobines de stator agencées suivant un axe de la piste sur laquelle l'avion doit être maintenu pendant sa trajectoire de décollage ou d'atterrissage.

Cependant, dans le cas du dispositif de l'invention, toute surface au sol sur laquelle il est souhaité déplacer l'avion suivant une ou des trajectoires souhaitées constitue une piste.

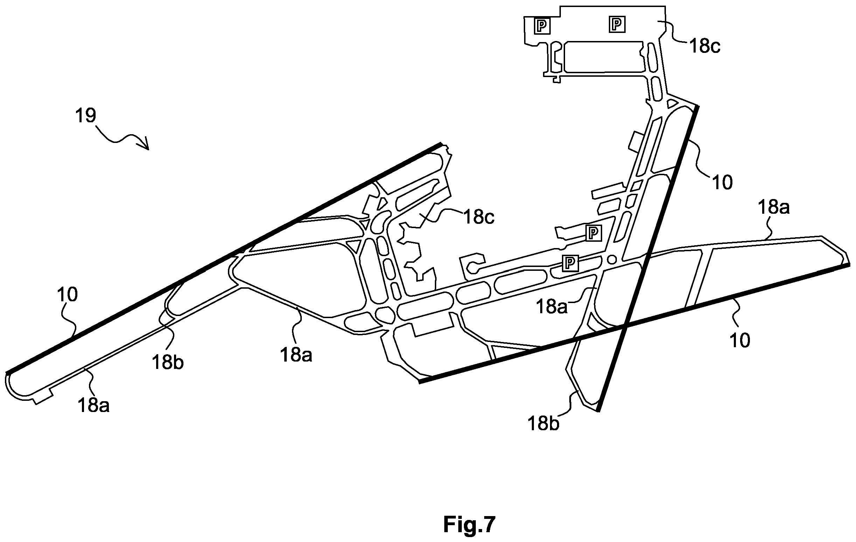

La figure 7 représente à titre d'exemple un plan des aires de circulation des aéronefs dans le cas d'une plateforme aéroportuaire 19 importante. De manière non limitative, une piste peut correspondre à une piste de décollage/atterrissage 10, à des voies de circulation 18a ou taxiway et des bretelles 18b utilisés par l'avion pour se rendre au début d'une piste de décollage avant un décollage ou pour sortir d'une piste d'atterrissage après un atterrissage ainsi que des aires de circulation et de stationnement 18c sur des parkings.

L'ensemble de ces surfaces affectées au déplacement au sol de l'avion est ici désigné "pistes".

Chaque piste 10, 18a, 18b, 18c comporte, dans le domaine aéronautique, un axe 11, généralement matérialisé de manière visible pour les pilotes par une ligne peinte sur le revêtement des dites pistes et qui dans le cas de l'invention comportent, au moins pour une partie d'entre elles, des bobines de stator 12 agencées en alignement suivant lesdits axes de sorte à créer un champ magnétique le long des dits axes.

Le dispositif comporte avantageusement un superviseur 14 qui communique avec l'avion 20, avec le système de contrôle/commande des bobines de stator et les bobines d'initialisation, et de manière générale avec tous les systèmes qui participent au fonctionnement du dispositif afin d'assurer la surveillance du bon état et du bon fonctionnement de chaque système et d'en assurer la coordination nécessaire pour la sécurité des avions et des opérateurs sur les pistes.

Il est ainsi obtenu un dispositif dans lequel des équipements intégrés aux infrastructures au sol et l'avion 20 solidarisé avec au moins un élément tracteur 30 coopèrent pour assurer les déplacements de l'avion lors de tout ou partie des déplacements au sol.

Suivant une méthode de mise en oeuvre du dispositif dans les exemples de réalisation décrit précédemment, un avion 20 est par exemple à l'arrêt en un point de stationnement, par exemple un parking ou une position d'embarquement de passager, lequel point de stationnement étant située sur une ligne le long de laquelle sont agencées des bobines de stator.

Dans une première étape, un élément tracteur 30 est amené à proximité de l'avion puis solidarisé audit avion par exemple par un dispositif de fixation à l'atterrisseur avant 22.

L'élément tracteur 30 peut avoir été magnétisé dans une zone dédiée, par exemple un atelier de magnétisation, avant d'être solidarisé à l'avion, ou non.

Dans les deux cas il peut être apporté par des moyens de manutention ordinaires, par exemple un chariot de transport adapté, mais s'il est préalablement magnétisé, il peut également être amené en suivant une ligne de bobines de stator depuis la zone de magnétisation jusqu'à l'avion.

En raison de la lévitation de l'élément tracteur dans ce dernier cas, l'élément tracteur peut être déplacé avec une force minime, par exemple tracté ou poussé par un opérateur, si toutes les bobines du trajet suivi sont excitées de sorte à créer un champ magnétique de caractéristiques sensiblement constantes sur la trajectoire de déplacement. Dans un champ magnétique généré par ce mode d'excitation des bobines, l'élément tracteur 30 n'est soumis à aucune force de propulsion suivant la direction de l'alignement des bobines de stator 12, mais il est maintenue latéralement sans pouvoir dévier de la ligne matérialisée par lesdites bobines de stator.

Suivant une variante, les bobines de stator 12 dont l'alignement correspond à la trajectoire à suivre par l'élément tracteur 30 pour rejoindre l'avion 20 sont excitées successivement comme dans le mode de fonctionnement en moteur linéaire de sorte que l'élément tracteur 30 se déplace vers l'avion sans intervention mécanique directe. Un tel déplacement motorisé peut être réalisé de manière automatique par un système de gestion et de guidage des éléments tracteurs ou partiellement contrôlé par opérateur, par exemple disposant d'une télécommande agissant sur le système de contrôle/commande des bobines de stator.

Lorsque l'élément tracteur 30 n'a pas été préalablement magnétisé avant d'être solidarisé à l'avion, une étape de magnétisation est réalisée. Lors de cette étape de magnétisation, l'élément tracteur est placé au dessus du sol à une hauteur de lévitation à laquelle il est souhaité obtenir son déplacement ultérieur. La position en hauteur souhaité peut être obtenue par des cales d'épaisseur adaptée qui seront retirées ensuite ou par un système de levage temporaire, non représenté, agencé sur le sol ou sur l'avion. Ensuite le champ magnétique initial nécessaire à la magnétisation de la masse magnétique est créé soit par des bobines d'initiation 37 de l'élément tracteur 30 soit par des bobines d'initiation ou de stator intégrées dans la piste, puis la température de la masse magnétique 31 est abaissée en dessous de la température critique Tc, par exemple en remplissant l'enceinte du cryostat contenant la masse magnétique avec de l'azote liquide. Lorsque la température prévue pour la masse magnétique est atteinte et stabilisée, le champ magnétique initial est annulé.

A cette étape, l'avion 20 est prêt à être déplacé par l'élément tracteur 30, dans cet exemple en roulant sur les roues du train d'atterrissage 21.

Dans une seconde étape, une excitation adaptée des bobines de stator 12 intégrées dans la piste ou se trouve l'avion 20, formant pour celles réparties le long de la trajectoire au sol souhaitée le stator du moteur linéaire dont l'élément tracteur est le rotor, est réalisée par le système de contrôle/commande 13 des bobines, en fonction d'informations du système superviseur 14, de sorte que l'avion est déplacé entre différents emplacements au sol à une vitesse souhaitée de roulage par exemple vers un autre point de stationnement tel qu'une aire de chargement de passagers.

Il doit être remarqué que des trajectoires multiples sont possibles de jonctions de deux ou plusieurs pistes pourvues de bobines de stator, le choix des bobines de stator excitées déterminant la trajectoire suivie. Il est ainsi formé des aiguillages « invisibles » gérés par le système de contrôle/commande des bobines.

Il doit être remarqué que, sous réserve d'un dispositif d'accouplement de l'élément tracteur à l'avion adapté, le déplacement de l'avion peut être réalisé indifféremment dans les deux sens : en marche vers l'avant de l'avion ou vers l'arrière de l'avion, ce dernier cas étant particulièrement utile lorsqu'un avion quitte une aire d'embarquement de passagers par passerelles.

Dans cette seconde étape l'avion 20 est également, si souhaité, déplacé depuis un emplacement de stationnement vers un seuil d'une piste de décollage 10.

Dans un mode de mise en oeuvre, le système superviseur 14 transmet des instructions de déplacement de l'avion 20 en fonction de demandes transmises depuis ledit avion et en prenant en compte les éventuels mouvements au sol d'autres avions.

Dans un autre mode de mise en oeuvre, le déplacement de l'avion 20 tracté par l'élément tracteur 30 est commandé en continu par un opérateur, par exemple un pilote dans l'avion, dont des ordres de guidage en directions, lorsqu'une possibilité de choix entre plusieurs pistes est possible, et en vitesses sont transmis au système de contrôle/commande 13 des bobines pour déplacer l'avion. Dans ce mode le déplacement de l'avion est réalisé sous les seules instructions du pilote de l'avion ou d'un opérateur au sol, comme dans un déplacement au moteur ou par un véhicule tracteur dans les modes opératoires aujourd'hui mis en oeuvre, mais avec la possibilité d'intervention du superviseur 14 qui au besoin modifie les instructions de l'opérateur, par exemple en immobilisant l'avion pour des raisons de sécurité.

Les communications et transmissions de données et d'ordres entre l'avion 20 et le superviseur 14 sont réalisées par tout moyen de transmission de données. Par exemple la transmission des données est réalisée par des liaisons radio 15 qui peuvent être des liaisons existantes du type DataLink. La transmission des données peut également être réalisée par des moyens affectés au dispositif, par exemple en utilisant le réseau d'alimentation et de contrôle des bobines.

Dans une troisième étape lorsque l'avion 20 a été déplacé par l'élément tracteur 30 jusqu'au seuil d'une piste de décollage, l'avion commence une phase de décollage.

Dans un mode de mise en oeuvre, le décollage est réalisé de manière conventionnelle avec les seuls moyens de propulsion en vol de l'avion.

Dans ce mode le pilote de l'avion 20 ou le système superviseur 14 via le système de contrôle/commande des bobines commande la séparation de l'élément tracteur 30 et son déplacement vers un poste d'attente ou vers un autre avion devant être tracté.

Le pilote est alors en mesure de réaliser un décollage conventionnel après avoir procédé à l'allumage des moteurs, ce qui a le cas échéant été réalisé au cours de l'étape de tractage avant d'arriver à la piste de décollage 10.

Dans un autre mode de mise en oeuvre, la piste de décollage 10 comportant des bobines de stator 12, lesdites bobines de stator sont alimentées pour que l'élément tracteur 30 accélère l'avion 20 suivant l'axe de la piste 10 en créant un effet de catapulte.

L'action de l'élément tracteur 30 est combinée avec l'action des moteurs de propulsion de l'avion pour accélérer l'avion 20 jusqu'à la vitesse de décollage Vlo, décollage au moment duquel les moteurs de propulsion doivent fournir à l'avion la poussée de décollage attendue.

On remarquera ici qu'une phase d'accélération initiale sur la piste de décollage par l'élément tracteur 30 avec les moteurs au ralenti avant de solliciter les moteurs, réacteurs ou moteurs à hélices, pour obtenir la poussée de décollage permet de limiter le risque d'ingestion de corps étrangers qui seraient présents sur la piste 10 et ainsi d'améliorer la fiabilité ou la durabilité des réacteurs ou des hélices.

Lorsque la vitesse de décollage est atteinte et que l'avion 20 quitte le sol, dans le mode de réalisation décrit, l'élément tracteur 30 est déconnecté de l'avion puis le système de contrôle/commande 13 des bobines décélère l'élément tracteur 30 et guide son retour pour une autre utilisation en fonction d'instructions reçues du système superviseur 14.

Avantageusement le pilote ou des systèmes de l'avion communiquent avec le système de contrôle/commande des bobines de sorte à transmettre si besoin un ordre de d'arrêt d'urgence avant une vitesse de décision V1 d'interruption du décollage.

Dans le cas d'envoi d'un ordre d'arrêt d'urgence les bobines de stator sont alimentées pour ne plus réaliser de traction sur l'élément tracteur, tout en maintenant sa sustentation pour éviter un endommagement de l'élément tracteur, et le cas échéant les bobines de stator 12 de la piste 10 sont alimentées pour inverser la direction de la force générée sur l'élément tracteur 30 et participer au freinage d'urgence de l'avion 20.

Après un vol de l'avion, lorsque celui-ci est posé et a quitté la piste d'atterrissage, le système superviseur 14 transfert un élément tracteur 30 vers l'avion 20 auquel il se solidarise afin de tracter l'avion vers un point de stationnement prévu.

On notera ici que des éléments tracteurs différents et ou des bobines de stators d'un type différent peuvent être mis en oeuvre suivant que le déplacement de l'avion est un déplacement basse vitesse, comme sur les aires de circulation, ou une accélération et un déplacement grandes vitesses lors d'un décollage dans lequel les forces et énergies mises en jeu sont sensiblement plus importantes.

Dans l'exemple de réalisation décrit et de son mode opératoire, l'élément tracteur 30 appartient à un sous ensemble sol du dispositif 100.

Dans un autre exemple de réalisation, l'élément tracteur 30 est solidaire de l'avion 20 dont il fait partie sans en être séparable pour les besoins du fonctionnement du dispositif.

Dans cet exemple, le fonctionnement du dispositif 100 est simplifié en ce que les éléments tracteurs 30 ne sont plus gérés par le système superviseur 14, au moins lors de déplacements des éléments tracteurs 30 sans avion, et qu'il n'est pas nécessaire de disposer de moyen de connexion/déconnexion entre l'élément tracteur et l'avion.

L'élément tracteur 30 est alors fixé à demeure sur l'avion 20, par exemple sur le train d'atterrissage 21.

Dans ce mode de réalisation, le dispositif 100 permet en plus de réaliser un freinage et un guidage de l'avion lors du roulage pendant un atterrissage, sous réserve que la masse magnétique 31 de l'élément tracteur 30 soit toujours dans les conditions de température et de magnétisme nécessaires à son fonctionnement.

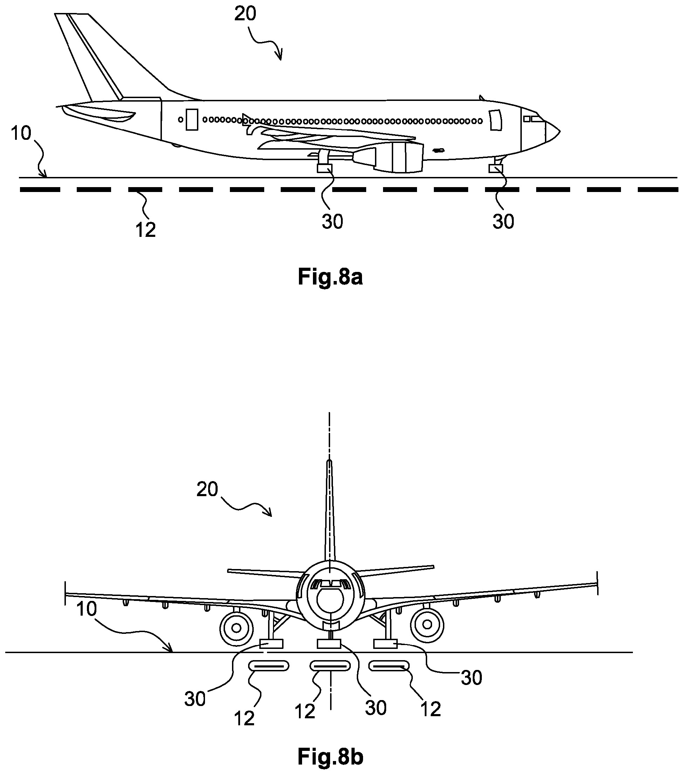

Dans un mode de réalisation, des éléments tracteurs 30 sont fixés à l'avion 20 par un système d'atterrisseurs sans roue, comme schématisé sur l'avion de la figure 8, les roues étant alors remplacées dans leur fonction de soutien par les éléments tracteurs qui sont aptes à léviter au dessus du sol incorporant des bobines de stator 12 et dans leur fonction de limitation des efforts au déplacement du fait de l'absence totale de frottement des éléments tracteurs 30 en état de lévitation.

Le système d'atterrisseur comporte avantageusement des éléments d'appui au sol sur lequel repose le poids de l'avion lorsque les éléments tracteurs 30 ne sont pas en lévitation, soit que les conditions de température et de magnétisme ne sont pas respectées pour les masses magnétiques 31 des éléments tracteurs, soit que les bobines de stator 12 dans la piste 10, 18a, 18b, 18c ne sont pas alimentées. Ces éléments d'appui d'une part présentent chacun une surface suffisante pour répartir le poids de l'avion qu'il supporte sur le revêtement de la piste et d'autre part peuvent être monté ou descendu par rapport à la masse magnétique d'un élément tracteur de sorte à placer ladite masse magnétique dans la position souhaitée lors de la magnétisation afin de garantir une lévitation en fonctionnement sans frottement au sol.

Dans ce mode de réalisation du dispositif 100, la piste comporte au moins une ligne de bobines de stator pour chacun des éléments tracteur 30 de l'avion qui ne peuvent pas suivre la même ligne, c'est à dire qui ne sont pas alignés suivant une direction de déplacement au sol de l'avion. Ce cas sera généralement rencontré si l'avion comporte un élément tracteur à l'emplacement de chacun des trains de voilure d'un avion conventionnel et un élément tracteur à l'emplacement du train avant, ce qui détermine dans ce cas trois lignes de bobines de stator pour une même trajectoire de roulage.

Toutefois des architectures d'avion spécifiques peuvent être envisagées, en combinant des solutions avec des éléments tracteurs et des roues.

Par exemple il peut être réalisé un train d'atterrissage avec des atterrisseurs de voilure à élément tracteur et avec un train auxiliaire avant à roue de sorte que chaque trajectoire suivie utilise seulement deux lignes de bobines de stator.

Par exemple il peut être réalisé un train d'atterrissage avec plusieurs éléments tracteurs alignés suivant un axe longitudinal de l'avion, solution dite de train d'atterrissage monotrace qui ne nécessite qu'une seule ligne de bobines de stator, la stabilité latérale de l'avion étant par exemple assurée par des atterrisseurs auxiliaires du type balancelle.

Il doit être noté que dans ce mode de réalisation du dispositif, en particulier lorsque l'avion est entièrement soumis à une lévitation lors de ses déplacements au sol, les contraintes dans les pistes ne sont plus créées par les forces de roulement liées à la pression exercée au sol par les pneumatiques du train d'atterrissage.

Suivant le dispositif 100 de l'invention, il est obtenu un ensemble comportant au moins une piste et au moins un aéronef qui pour les besoins des déplacements au sol des aéronefs, à basses vitesses sur les pistes de circulation et à grandes vitesses sur les pistes de décollage/atterrissage, met en oeuvre des moyens performants et silencieux, et qui évite ou limite l'utilisation des moteurs lors des mouvements de l'aéronef au sol.

Le dispositif 100 permet de remplacer l'utilisation des moteurs de propulsion de l'aéronef dans les phases de roulage à basses vitesses et assiste les moteurs de propulsion lors des décollages, avec des bénéfices sur la consommation de carburant, et sur la pollution chimique et sonore.

L'aéronef peut être un avion comme dans l'exemple illustré ou être un autre type d'aéronef ayant une phase de roulage au décollage, au moins dans certaines conditions, comme par exemple un hélicoptère.

## Revendications

1. Dispositif (100) comportant au moins une piste (10, 18a, 18b, 18c) et au moins un aéronef apte à se déplacer sur ladite au moins une piste, **caractérisé en ce que** l'au moins un aéronef est solidaire d'un élément tracteur (30) comportant une masse magnétique (31) formée principalement avec un matériau supraconducteur de type II et **en ce que** l'au moins une piste (10, 18a, 18b, 18c) comporte des bobines de stator (12) intégrées dans ladite au moins une piste, agencées suivant au moins une ligne de bobines parallèle à un axe (11) de ladite au moins une piste, le dispositif comportant un système de contrôle/commande (13) qui alimente les dites bobines de stator de manière à un créer champ magnétique assurant une lévitation de l'au moins un élément tracteur (30), préalablement magnétisé dans un état de supraconduction en phase II, au dessus de ladite au moins une piste.

2. Dispositif suivant la revendication 1 dans lequel le système de contrôle/commande (13) des bobines de stator comporte au moins un mode d'alimentation des bobines de stator pour créer un champ magnétique variable pour produire une force de déplacement de l'au moins un élément tracteur suivant l'au moins une ligne de bobines.

3. Dispositif suivant la revendication 1 ou la revendication 2 dans lequel l'élément tracteur (30) comporte un système de maintien de la masse magnétique (31) à une température comprise entre une température inférieure à une température critique Tc2 de transition de phase 2 du matériau supraconducteur de type II et supérieure à une température critique Tc1 de transition de phase 1 du matériau supraconducteur de type II.

4. Dispositif suivant l'une des revendications précédentes dans lequel l'élément tracteur (30) comporte au moins une bobine d'initiation (37) agencée pour produire un champ de magnétisation initial dans la masse magnétique (31).

5. Dispositif suivant l'une des revendications précédentes dans lequel le matériau supraconducteur de type II est un alliage YBaCuO comportant de l'Yttrium, du Baryum, du Cuivre et de l'Oxygène.

6. Dispositif suivant l'une des revendications précédentes dans lequel l'au moins un élément tracteur (30) est solidaire de l'aéronef pour tracter ledit aéronef roulant sur des roues d'un train d'atterrissage (21) dudit aéronef.

7. Dispositif suivant l'une des revendications 1 à 5 dans lequel au moins un atterrisseur de l'aéronef comporte au moins un élément tracteur (30) fixé audit au moins un atterrisseur pour assurer une lévitation de l'aéronef et une traction de l'aéronef.

8. Dispositif suivant l'une des revendications précédentes dans lequel l'au moins une piste (10, 18a, 18b, 18c) comporte une pluralité de lignes de bobines sensiblement parallèles à l'axe (11) de ladite au moins une piste.

9. Dispositif suivant l'une des revendications précédentes comportant une pluralité de pistes (10, 18a, 18b, 18c) comportant chacune au moins une ligne de bobines sensiblement parallèle à un axe de chacune des dites pistes de sorte que les lignes de bobines forme un réseau continu d'une plateforme aéroportuaire.

10. Dispositif suivant l'une des revendications précédentes comportant au moins un atelier de magnétisation d'éléments tracteurs, ledit au moins un atelier de magnétisation étant relié à la ligne de bobines de l'au moins une piste par une ligne de bobines.

11. Procédé de déplacement d'un aéronef, solidaire d'un élément tracteur (30) comportant une masse magnétique (31), sur une piste (10, 18a, 18b, 18c), comportant des bobines de stator (12) intégrées dans ladite piste, les dites bobines étant agencées suivant au moins une ligne de bobines parallèle à un axe (11) de ladite une piste, comportant :
- une étape de création d'un champ magnétique par les bobines de stator (12) pour induire sur l'élément tracteur (30) une force de lévitation de l'élément de traction.
- une étape de modification du champ magnétique créé par les bobines de stator pour induire sur l'élément tracteur (30) une force de traction dans un plan sensiblement horizontal et orientée suivant l'au moins une ligne de bobines.
**caractérisé en ce que**
- la masse magnétique (31) est formée principalement avec un matériau supraconducteur de type II ;
et **en ce que** le procédé comporte :
- une étape préalable de magnétisation de la masse magnétique (31) par application d'un champ magnétique initial à ladite masse magnétique lorsque ladite masse magnétique est à une température supérieure à une température critique Tc, puis par un abaissement de la température de ladite masse magnétique à une température inférieure à la température critique Tc en maintenant le champ magnétique initial, puis par une annulation du champ magnétique initial en maintenant la température de la masse magnétique en dessous de la température critique Tc.

12. Procédé suivant la revendication 11 dans lequel le champ magnétique créé par les bobines de stator pour induire une force de traction est modifié par un système de contrôle/commande (13) d'alimentation des bobines de stator en fonction d'ordres transmis audit système de contrôle/commande, lesdits ordres étant porteur d'une consigne de vitesse et ou d'accélération de l'aéronef.

13. Procédé suivant la revendication 11 ou la revendication 12 dans lequel des moteurs de propulsion de l'aéronef sont utilisés pour produire une poussée sur ledit aéronef lors de ses déplacements.

14. Procédé suivant l'une des revendications 11 à 13 dans lequel la force de traction induite sur l'élément tracteur (30) orientée suivant l'au moins une ligne de bobines peut être orientée soit vers une direction avant de l'aéronef, soit vers une direction arrière de l'aéronef.

15. Elément tracteur (30) comportant une masse magnétique (31), comportant au moins un crochet (36) pour solidariser ledit élément tracteur à un aéronef, **caractérisé en ce que** la masse magnétique (31) est formée principalement avec un matériau supraconducteur de type II préalablement magnétisé, et **en ce que** ledit élément tracteur comporte des moyens de maintien de la masse magnétique à une température cryogénique inférieure à une température critique Tc de superconduction électrique.

16. Elément tracteur suivant la revendication 15 dans lequel les moyens de maintien en température comportent une enceinte isolée d'un cryostat déterminant un volume contenant un liquide à une température inférieure à la température critique Tc.

17. Elément tracteur suivant la revendication 16 dans lequel le matériau supraconducteur de type II est un alliage YBaCuO comportant de l'Yttrium, du Baryum, du Cuivre et de l'Oxygène.

18. Elément tracteur suivant l'une des revendications 15 à 17 comportant au moins une bobine d'initiation (37) agencée pour produire un champ de magnétisation initial dans la masse magnétique (31).

19. Avion (20) comportant au moins un élément tracteur conforme à l'une des revendications 15 à 18 fixé audit avion de sorte que le au moins un élément tracteur se trouve à proximité du sol lorsque l'avion est au sol.

## Patentansprüche

1. Vorrichtung (100), umfassend mindestens eine Spur (10, 18a, 18b, 18c) und mindestens ein Flugzeug, das geeignet ist, sich auf der mindestens einen Spur zu bewegen, **dadurch gekennzeichnet, dass** das mindestens eine Flugzeug mit einem Zugelement (30) verbunden ist, umfassend eine Magnetmasse (31), die hauptsächlich mit einem supraleitenden Material des Typs II ausgebildet ist, und dass die mindestens eine Spur (10, 18a, 18b, 18c) Statorspulen (12) umfasst, die in die mindestens eine Spur integriert und entlang mindestens einer Spulenlinie parallel zu einer Achse (11) der mindestens einen Spur angeordnet sind, wobei die Vorrichtung ein Kontroll-/Steuersystem (13) umfasst, das die Statorspulen versorgt, um ein Magnetfeld zu erzeugen, das eine Levitation des mindestens einen Zugelements (30), vorher in einem Zustand der Supraleitung in Phase II magnetisiert, über der mindestens einen Spur gewährleistet.

2. Vorrichtung nach Anspruch 1, bei der das Kontroll-/Steuersystem (13) der Statorspulen mindestens einen Versorgungsmodus der Statorspulen umfasst, um ein variables Magnetfeld zu erzeugen, um eine Bewegungskraft des mindestens einen Zugelements entlang mindestens einer Spulenlinie zu erzeugen.

3. Vorrichtung nach Anspruch 1 oder Anspruch 2, bei der das Zugelement (30) ein System zum Halten der Magnetmasse (31) auf einer Temperatur zwischen einer Temperatur unter einer kritischen Temperatur Tc2 eines Phasenübergangs 2 des supraleitenden Materials des Typs II und einer Temperatur über einer kritischen Temperatur Tc1 eines Phasenübergangs 1 des supraleitenden Materials des Typs II.

4. Vorrichtung nach einem der vorhergehenden Ansprüche, bei der das Zugelement (30) mindestens eine Initiierungsspule (37) umfasst, die dazu angeordnet ist, ein anfängliches Magnetisierungsfeld in der Magnetmasse (31) zu erzeugen.

5. Vorrichtung nach einem der vorhergehenden Ansprüche, bei der das supraleitende Material des Typs II eine YBaCuO-Legierung ist, umfassend Yttrium, Barium, Kupfer und Sauerstoff.

6. Vorrichtung nach einem der vorhergehenden Ansprüche, bei der das mindestens eine Zugelement (30) mit dem Flugzeug verbunden ist, um das auf Rädern eines Fahrwerks (21) des Flugzeugs fahrende Flugzeug zu ziehen.

7. Vorrichtung nach einem der Ansprüche 1 bis 5, bei der mindestens ein Fahrwerk des Flugzeugs mindestens ein Zugelement (30) umfasst, das an dem mindestens einen Fahrwerk befestigt ist, um eine Levitation des Flugzeugs und ein Ziehen des Flugzeugs zu gewährleisten.

8. Vorrichtung nach einem der vorhergehenden Ansprüche, bei der mindestens eine Spur (10, 18a, 18b, 18c) eine Vielzahl von Spulenlinien umfasst, die im Wesentlichen zur Achse (11) der mindestens einen Spur parallel sind.

9. Vorrichtung nach einem der vorhergehenden Ansprüche, umfassend eine Vielzahl von Spuren (10, 18a, 18b, 18c), jeweils umfassend mindestens eine Spulenlinie im Wesentlichen parallel zu einer Achse jeder der Spuren, so dass die Spulenlinien ein kontinuierliches Netz einer Flughafenplattform bilden.

10. Vorrichtung nach einem der vorhergehenden Ansprüche, umfassend mindestens eine Werkstätte zur Magnetisierung von Zugelementen, wobei die mindestens eine Magnetisierungswerkstätte mit der Spulenlinie der mindestens einen Spur durch eine Spulenlinie verbunden ist.

11. Verfahren zum Bewegen eines Flugzeugs, das mit einem Zugelement (30) verbunden ist, umfassend eine Magnetmasse (31) auf einer Spur (10, 18a, 18b, 18c), umfassend Statorspulen (12), die in die Spur integriert sind, wobei die Spulen entlang mindestens einer Spulenlinie parallel zu einer Achse (11) der einen Spur angeordnet sind, umfassend:
- einen Schritt der Erzeugung eines Magnetfeldes durch die Statorspulen (12), um auf dem Zugelement (30) eine Levitationskraft des Zugelements zu induzieren;
- einen Schritt der Veränderung des von den Statorspulen erzeugten Magnetfeldes, um auf dem Zugelement (30) eine Zugkraft in einer im Wesentlichen horizontalen Ebene, die entlang der mindestens einen Spulenlinie ausgerichtet ist, zu induzieren,
**dadurch gekennzeichnet, dass**
- die Magnetmasse (31) hauptsächlich mit einem supraleitenden Material des Typs II ausgebildet ist;
und dass das Verfahren umfasst:
- einen vorherigen Schritt der Magnetisierung der Magnetmasse (31) durch Anlegen eines anfänglichen Magnetfeldes an die Magnetmasse, wenn die Magnetmasse auf einer Temperatur über einer kritischen Temperatur Tc ist, dann durch Absenken der Temperatur der Magnetmasse auf eine Temperatur unter der kritischen Temperatur Tc, wobei das anfängliche Magnetfeld aufrechterhalten wird, dann durch eine Aufhebung des anfänglichen Magnetfeldes, wobei die Temperatur der Magnetmasse unter der kritischen Temperatur Tc gehalten wird.

12. Verfahren nach Anspruch 11, bei dem das von den Statorspulen erzeugte Magnetfeld, um eine Zugkraft zu induzieren, durch ein Kontroll-/Steuersystem (13) zur Versorgung der Statorspulen in Abhängigkeit von Befehlen, die an das Kontroll-/Steuersystem übertragen werden, verändert wird, wobei die Befehle einen Geschwindigkeits- und/oder Beschleunigungssollwert des Flugzeugs tragen.

13. Verfahren nach Anspruch 11 oder Anspruch 12, bei dem Antriebsmotoren des Flugzeugs verwendet werden, um einen Schub auf das Flugzeug bei seinen Bewegungen auszuüben.

14. Verfahren nach einem der Ansprüche 11 bis 13, bei dem die auf dem Zugelement (30) induzierte Zugkraft, die entlang der mindestens einen Spulenlinie ausgerichtet ist, entweder in eine vordere Richtung des Flugzeugs oder in eine hintere Richtung des Flugzeugs gerichtet sein kann.

15. Zugelement (30), umfassend eine Magnetmasse (31), umfassend mindestens einen Haken (36), um das Zugelement mit einem Flugzeug zu verbinden, **dadurch gekennzeichnet, dass** die Magnetmasse (31) hauptsächlich mit einem vorher magnetisieren supraleitenden Material des Typs II ausgebildet ist, und dass das Zugelement Mittel zum Halten der Magnetmasse auf einer kryogenen Temperatur unter einer kritischen Temperatur Tc einer elektrischen Supraleitung umfasst.

16. Zugelement nach Anspruch 15, bei dem die Mittel zum Halten auf Temperatur einen isolierten Raum eines Kryostats umfassen, der ein Volumen bestimmt, das eine Flüssigkeit mit einer Temperatur unter der kritischen Temperatur Tc enthält.

17. Zugelement nach Anspruch 16, bei dem das supraleitende Material des Typs II eine YBaCuO-Legierung ist, umfassend Yttrium, Barium, Kupfer und Sauerstoff.

18. Zugelement nach einem der Ansprüche 15 bis 17, umfassend mindestens eine Initiierungsspule (37), die dazu vorgesehen ist, ein anfängliches Magnetisierungsfeld in der Magnetmasse (31) zu erzeugen.

19. Flugzeug (20), umfassend mindestens ein Zugelement nach einem der Ansprüche 15 bis 18, das an dem Flugzeug montiert ist, so dass sich das mindestens eine Zugelement in der Nähe des Bodens befindet, wenn das Flugzeug am Boden ist.

## Claims

1. Device (100) comprising at least one lane (10, 18a, 18b, 18c) and at least one aircraft able to move along said at least one lane, **characterized in that** the at least one aircraft is secured to a tractor element (30) comprising a magnetic mass (31) formed mainly with a type II superconductor and **in that** the at least one lane (10, 18a, 18b, 18c) comprises stator coils (12) built into said at least one lane, arranged in at least one line of coils parallel to an axis (11) of said at least one lane, the device comprising a command/control system (13) which powers said stator coils in such a way as to create a magnetic field that causes the at least one tractor element (30), previously magnetized into a phase II superconducting state, to levitate above said at least one lane.

2. Device according to Claim 1, in which the stator coil command/control system (13) comprises at least one mode of powering the stator coils to create a variable magnetic field so as to produce a force causing the at least one tractor element to move along the at least one line of coils.

3. Device according to Claim 1 or claim 2, in which the tractor element (30) comprises a system for keeping the magnetic mass (31) at a temperature comprised between a temperature lower than a type II superconductor phase 2 critical transition temperature Tc2 and higher than a type II superconductor phase 1 critical transition temperature Tc1.

4. Device according to one of the preceding claims, in which the tractor element (30) comprises at least one initiation coil (37) designed to produce an initial magnetizing field in the magnetic mass (31) .

5. Device according to one of the preceding claims, in which the type II superconductor is a YBaCuO alloy containing yttrium, barium, copper and oxygen.

6. Device according to one of the preceding claims, in which the at least one tractor element (30) is secured to the aircraft for towing said aircraft running on wheels of a landing gear (21) of said aircraft.

7. Device according to one of Claims 1 to 5, in which at least one landing gear of the aircraft comprises at least one tractor element (30) fixed to said at least one landing gear in order to levitate the aircraft and tow the aircraft.

8. Device according to one of the preceding claims, in which the at least one lane (10, 18a, 18b, 18c) comprises a plurality of lines of coils substantially parallel to the axis (11) of said at least one lane.

9. Device according to one of the preceding claims, comprising a plurality of lanes (10, 18a, 18b, 18c) each one comprising at least one line of coils which is substantially parallel to an axis of each of said lanes so that the lines of coils form a continuous network of an airport platform.

10. Device according to one of the preceding claims comprising at least one tractor element magnetization shop, said at least one magnetization shop being connected to the line of coils of the at least one lane by a line of coils.

11. Method for moving an aircraft, secured to a tractor element (30) comprising a magnetic mass (31), along a lane (10, 18a, 18b, 18c), comprising stator coils (12) built into said lane, said coils being arranged in at least one line of coils which is parallel to an axis (11) of said one lane, comprising:
- a step of creating a magnetic field using the stator coils (12) in order to induce in the tractor element (30) a force that levitates the traction element;
- a step of modifying the magnetic field created by the stator coils in order to induce in the tractor element (30) a traction force in a substantially horizontal plane and which force is directed along the at least one line of coils;
**characterized in that**
- the magnetic mass (31) is formed mainly with a type II superconductor;
and **in that** the method comprises:
- a preliminary step of magnetizing the magnetic mass (31) by applying an initial magnetic field to said magnetic mass when said magnetic mass is at a temperature higher than a critical temperature Tc, then by lowering the temperature of said magnetic mass to a temperature below the critical temperature Tc while maintaining the initial magnetic field, then by canceling the initial magnetic field while keeping the temperature of the magnetic mass below the critical temperature Tc.

12. Method according to Claim 11, in which the magnetic field created by the stator coils in order to induce a traction force is modified by a stator coil power command/control system (13) on the basis of commands transmitted to said command/control system, said commands containing an aircraft speed or acceleration instruction.

13. Method according to Claim 11 or Claim 12, in which aircraft propulsion engines are used to produce thrust on said aircraft as it moves around.

14. Method according to one of Claims 11 to 13, in which the traction force induced in the tractor element (30) and directed along at least one line of coils can be directed either toward the front of the aircraft or toward the rear of the aircraft.

15. Tractor element (30) comprising a magnetic mass (31), comprising at least one hook (36) for securing said tractor element to an aircraft, **characterized in that** the magnetic mass (31) is formed mainly with a previously magnetized type II superconductor, and **in that** said tractor element comprises means for keeping the magnetic mass at a cryogenic temperature below an electrically superconducting critical temperature Tc.

16. Tractor element according to Claim 15, in which the temperature maintaining means comprise an insulated chamber of a cryostat determining a volume containing a liquid at a temperature below the critical temperature Tc.

17. Tractor element according to Claim 16, in which the type II superconductor is a YBaCuO alloy containing yttrium, barium, copper and oxygen.

18. Tractor element according to one of Claims 15 to 17 comprising at least one initiation coil (37) designed to produce an initial magnetization field in the magnetic mass (31).

19. Airplane (20) comprising at least one tractor element according to one of Claims 15 to 18 fixed to said airplane so that the at least one tractor element is near the ground when the airplane is on the ground.
